# EUROPEAN PATENT SPECIFICATION

(11) **EP 3 433 959 B1**
(45) Date of publication and mention of the grant of the patent: **22.04.2020**
(21) Application number: 16760274.7
(22) Date of filing: 22.08.2016
(51) Int. Cl.: H04L 1/18, H04L 1/00, H04L 5/00, H04W 72/04

(54) **DATA TRANSMISSION USING AN ADAPTIVE TRANSMISSION TIME INTERVAL STRUCTURE IN A WIRELESS COMMUNICATION SYSTEM**
DATENÜBERTRAGUNG MITHILFE EINER ADAPTIVEN ÜBERTRAGUNGSZEITINTERVALLSTRUKTUR IN EINEM DRAHTLOSKOMMUNIKATIONSSYSTEM
TRANSMISSION DE DONNÉES À L'AIDE D'UNE STRUCTURE D'INTERVALLE DE TEMPS DE TRANSMISSION ADAPTATIF DANS UN SYSTÈME DE COMMUNICATION SANS FIL

(30) Priority: 25.03.2016 US 201662313612 P
(43) Date of publication of application: 30.01.2019
(73) Proprietor: Intel IP Corporation, Santa Clara, CA 95054 (US)
(72) Inventor: HE, Hong, Beijing Heilongjiang 100190 (CN); HAN, Seunghee, San Jose California 95120 (US); KWON, Hwan-Joon, Santa Clara California 95054 (US); DAVYDOV, Alexei, Nizhny Novgorod 603132 (RU); XIONG, Gang, Portland, OR 97229 (US)
(74) Representative: Barnfather, Karl Jon
(86) International application number: PCT/US2016/047998
(87) International publication number: WO 2017/164920

(56) References cited:
- EP-A1- 2 249 598
- WO-A1-2016/040290
- WO-A1-2016/048597
- "Study on Latency reduction techniques For LTE", 3GPP DRAFT; RP-150310 MOTIVATIONS FOR STUDY ON LATENCY REDUCTION TECHNIQUES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CE , 3 March 2015 (2015-03-03), XP050932081, Retrieved from the Internet: URL:http://www.3gpp.org/ftp/Meetings_3GPP_ SYNC/RAN/Docs/ [retrieved on 2015-03-03]

## Description

### FIELD

The present disclosure relates to wireless communication technology, and more specifically to techniques for adaptive transmission time interval structures in a wireless communication system.

### BACKGROUND

Packet data latency is a key performance metric in today's communication systems. Packet data latency is important not only for the perceived responsiveness of the system; it is also a parameter that influences the throughput. As such, hypertext transfer protocol (HTTP) / transmission control protocol (TCP) is a predominate application along with the transport layer protocol used on the internet today. A low client-server round-trip time (RTT) is of great importance for applications based on the TCP, where the congestion control mechanisms of TCP limit the data rate as a function of the observed RTT. An RTT that is too large can, as in this case, lead to inefficiency in the radio-resource utilization and a degraded end-user performance.

EP 2 249 598 A1 shows a communication apparatus in a mobile communication system: The apparatus includes a first control information generation unit configured to generate first control information including retransmission information on a previously received data channel, a second control information generation unit configured to generate second control information including scheduling information on radio resources and a transmission signal generation unit configured to generate a transmission signal including a lower layer control channel including at least one of the first control information and the second control information. The transmission signal generation unit generates the transmission signal to transmit the first control information in any of subframes arriving at a first cycle and to transmit the second control information in any of subframes arriving at a second cycle longer than the first cycle.

WO 2016/040290 A1 discloses techniques for determining a transmission time interval (TTI) duration and/or varying the TTI duration are contemplated. The TTI duration may be varied based on one or more of: the timing a transmission, the amount of data available for transmission, or the type of data to be transmitted. The TTI duration may be for one or more of: the Enhanced Physical Downlink Control Channel (EPDCCH), the Physical Downlink Shared Channel (PDSCH), and/or the Physical Uplink Control Channel (PUCCH). One or more different TTI durations may be achieved by modifying OFDM symbols per TTI and/or symbol duration (e.g., subcarrier spacing). One or more variable time-slot boundaries are contemplated. TTI duration per set of subcarriers is contemplated. One or more timing rules to deal with different processing time(s) are contemplated.

### BRIEF DESCRIPTION OF THE DRAWINGS

The invention is defined by the independent claims. Advantageous embodiments are subject to the dependent claims.

### BRIEF DESCRIPTION OF THE DRAWINGS

**FIG. 1** is a block diagram illustrating an example network device useable in connection with various aspects or embodiments described herein.
**FIG. 2** is a block diagram of a system or device employable in an enhanced or evolved Node B (eNB), other base station, or a UE that facilitates shortened time transmission intervals (S-TTIs) according to various aspects or embodiments described herein.
**FIG. 3** is a diagram illustrating sets of graphs of cumulative distribution functions for down link (DL) user perceived throughput (UPT) in accordance with various aspects described herein.
**FIG. 4** illustrates example communication formats for signaling S-TTI configurations in a network according to various aspects or embodiments described herein.
**FIG. 5** illustrates an example signaling format for enabling generation or processing of indication(s) of S-TTI / TTI within a DL transmission according to various aspects or embodiments described herein.
**FIG. 6** illustrates another example signaling format for enabling generation or processing of indication(s) of S-TTI / TTI within a DL transmission according to various aspects or embodiments described herein in a wireless network by one or more network devices.
**FIG. 7** is a flow diagram illustrating another method of processing or generating an indication of S-TTI according to various aspects or embodiments described herein in a wireless network by one or more network devices.

### DETAILED DESCRIPTION

The present disclosure will now be described with reference to the attached drawing figures, wherein like reference numerals are used to refer to like elements throughout, and wherein the illustrated structures and devices are not necessarily drawn to scale. As utilized herein, terms "component," "system," "interface," and the like are intended to refer to a computer-related entity, hardware, software (e.g., in execution), and/or firmware. For example, a component can be a processor (e.g., a microprocessor, a controller, or other processing device), a process running on a processor, a controller, an object, an executable, a program, a storage device, a computer, a tablet PC and/or a user equipment (UE) (e.g., mobile / wireless phone, etc.) with a processing device. By way of illustration, an application running on a server and the server can also be a component. One or more components can reside within a process, and a component can be localized on one computer and/or distributed between two or more computers. A set of elements or a set of other components can be described herein, in which the term "set" can be interpreted as "one or more."

Further, these components can execute from various computer readable storage media or computer readable medium having various data structures stored thereon such as with a module, for example. The components can communicate via local and/or remote processes such as in accordance with a signal having one or more data packets (e.g., data from one component interacting with another component in a local system, distributed system, and/or across a network, such as, the Internet, a local area network, a wide area network, or similar network with other systems via the signal).

As another example, a component can be an apparatus with specific functionality provided by mechanical parts operated by electric or electronic circuitry, in which the electric or electronic circuitry can be operated by a software application or a firmware application executed by one or more processors. The one or more processors can be internal or external to the apparatus and can execute at least a part of the software or firmware application. As yet another example, a component can be an apparatus that provides specific functionality through electronic components without mechanical parts; the electronic components can include one or more processors therein to execute software and/or firmware that confer(s), at least in part, the functionality of the electronic components.

Use of the word exemplary is intended to present concepts in a concrete fashion. As used in this application, the term "or" is intended to mean an inclusive "or" rather than an exclusive "or". That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form. Furthermore, to the extent that the terms "including", "includes", "having", "has", "with", or variants thereof are used in either the detailed description and the claims, such terms are intended to be inclusive in a manner similar to the term "comprising."

As used herein, the term "circuitry" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware.

### INTRODUCTION

In consideration of the above described deficiencies of wireless communication operations, various aspects for signaling components to provide sufficient and dynamic scheduling flexibility in shortened TTI configurations having shorter lengths are disclosed. In long term evolution (LTE) systems, the time transmission interval (TTI) has a duration of about 1ms with about 14 / 12 symbols in length. TTI can refer to the duration of a transmission on the radio link. The TTI is further related to the size of the data blocks passed from the higher network layers to the radio link layer, for example. The TTI length has an impact both on the time for transmitting TCP packets over an air interface and on processing time. Shortening TTI length could contribute to an overall round-trip time (RTT) reduction. As the initial window size for each TCP connection is very small, the receiver can acknowledge TCP packets faster if a shortened TTI (S-TTI) length is configured, which results in faster increases in the TCP window size at the transmitter side and could eventually improve the overall DL throughput performance. At the same time, this also causes additional overhead as control resources can be additionally present at each S-TTI in order to fully exploit the latency reduction benefit.

In one aspect (or embodiment), signaling mechanisms can be utilized in a network device of a cell network to shorten the TTIs, forming shortening / shortened TTIs (S-TTIs) based on: 1) user equipment (UE) (e.g., mobile phone) specific information as well as 2) cell-specific information. Thus, one UE configured within a cell network could be provided with configurations by an evolved NodeB or LTE base station to generate / process an S-TTI, while another UE communicatively coupled to the cell network could be provided a standard 3GPP TTI, such as one that has 14 or 12 orthogonal frequency-division multiplexing (OFDM) symbols. Additionally, other UEs could have different S-TTI of different lengths they utilize to base transmission or reception thereon; these S-TTIs can also dynamically vary and be shorter than the standard TTI (e.g., 12 or 24 OFDM symbols in length). The variation in S-TTI configurations can include 2, 3, 4, or 7 symbols in length for example, and can vary depending upon the dynamic conditions of the network (cell-specific information) and UE-specific parameters (UE-specific information). While some UEs within a cell can operate with standard TTIs, other UEs can concurrently utilized S-TTIs shorter and variable in length. The UEs can also dynamically alter between S-TTIs and standard TTIs according to changing network or cell conditions.

Additionally, the UEs of a cell network can have different needs in terms of latency and amount of down link (DL) data with shortened TTI, which can affect trade-offs between latency and throughput that are considered when selecting S-TTI configurations for transmission / reception of data. As such, signaling mechanisms (or signaling components) being disclosed herein can provide sufficient scheduling flexibility in S-TTI length selection, and thus, also dynamically control trade-offs between overhead and latency reduction for receiving HARQ and thereafter TCP ACKs. In effect, various signaling methods can operate to support flexible S-TTIs, and their length configurations to achieve latency reduction targets as well as to improve the user performance throughput (UPT) at the UE. Additional aspects and details of the disclosure are further described below with reference to figures.

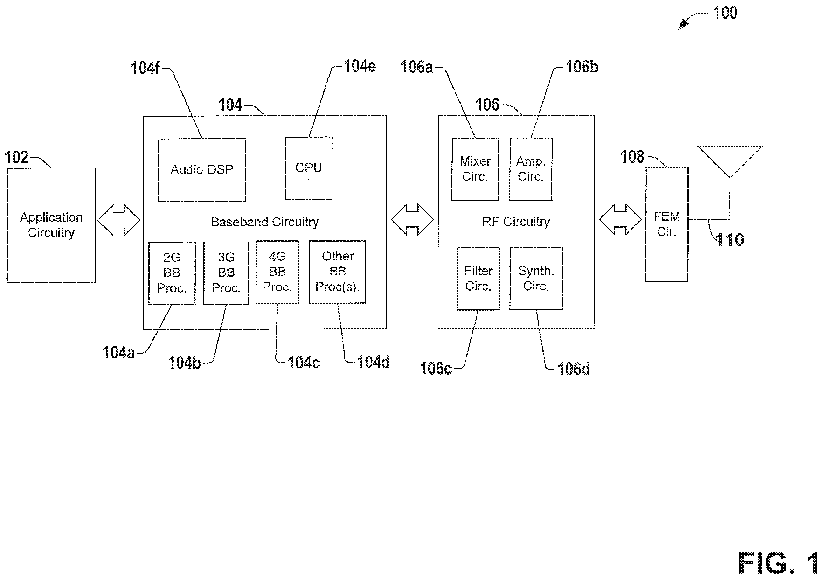

Embodiments described herein can be implemented into a system using any suitably configured hardware and/or software. **FIG.** 1 illustrates, for one embodiment, example components of a cell network device 100, such as a base station, a macro cell network device, a secondary cell network device, a small cell network device, an evolved/enhanced NodeB (eNB), or any other network device (e.g. a user equipment, pico cell, Femto cell or the like). In some embodiments, the cell network device 100 can include application circuitry 102, baseband circuitry 104, Radio Frequency (RF) circuitry 106, front-end module (FEM) circuitry 108 and one or more antennas 110, coupled together at least as shown.

The application circuitry 102 can include one or more application processors. For example, the application circuitry 102 can include circuitry such as, but not limited to, one or more single-core or multi-core processors. The processor(s) can include any combination of general-purpose processors and dedicated processors (e.g., graphics processors, application processors, etc.). The processors can be coupled with and/or can include memory/storage and can be configured to execute instructions stored in the memory/storage to enable various applications and/or operating systems to run on the system.

The baseband circuitry 104 can include circuitry such as, but not limited to, one or more single-core or multi-core processors. The baseband circuitry 104 can include one or more baseband processors and/or control logic to process baseband signals received from a receive signal path of the RF circuitry 106 and to generate baseband signals for a transmit signal path of the RF circuitry 106. Baseband processing circuity 104 can interface with the application circuitry 102 for generation and processing of the baseband signals and for controlling operations of the RF circuitry 106. For example, in some embodiments, not covered by the claims, the baseband circuitry 104 can include a second generation (2G) baseband processor 104a, third generation (3G) baseband processor 104b, fourth generation (4G) baseband processor 104c, and/or other baseband processor(s) 104d for other existing generations, generations in development or to be developed in the future (e.g., fifth generation (5G), 6G, etc.). The baseband circuitry 104 (e.g., one or more of baseband processors 104a-d) can handle various radio control functions that enable communication with one or more radio networks via the RF circuitry 106. The radio control functions can include, but are not limited to, signal modulation/demodulation, encoding/decoding, radio frequency shifting, etc. In some embodiments, modulation/demodulation circuitry of the baseband circuitry 104 can include Fast-Fourier Transform (FFT), precoding, and/or constellation mapping / demapping functionality. In some embodiments, not covered by the claims, encoding/decoding circuitry of the baseband circuitry 104 can include convolution, tail-biting convolution, turbo, Viterbi, and/or Low Density Parity Check (LDPC) encoder/decoder functionality. Embodiments of modulation/demodulation and encoder/decoder functionality are not limited to these examples and can include other suitable functionality in other embodiments.

In some embodiments, not covered by the claims, the baseband circuitry 104 can include elements of a protocol stack such as, for example, elements of an evolved universal terrestrial radio access network (EUTRAN) protocol including, for example, physical (PHY), media access control (MAC), radio link control (RLC), packet data convergence protocol (PDCP), radio resource control (RRC) elements, or other communication protocol layer components. A central processing unit (CPU) 104e of the baseband circuitry 104 can be configured to run elements of the protocol stack for signaling of the PHY, MAC, RLC, PDCP and/or RRC layers. In some embodiments, the baseband circuitry can include one or more audio digital signal processor(s) (DSP) 104f. The audio DSP(s) 104f can be include elements for compression/decompression and echo cancellation and can include other suitable processing elements in other embodiments. Components of the baseband circuitry can be suitably combined in a single chip, a single chipset, or disposed on a same circuit board in some embodiments. In some embodiments, not covered by the claims, some or all of the constituent components of the baseband circuitry 104 and the application circuitry 102 can be implemented together such as, for example, on a system on a chip (SOC).

In some embodiments, not covered by the claims, the baseband circuitry 104 can provide for communication compatible with one or more radio technologies. For example, in some embodiments, not covered by the claims, the baseband circuitry 104 can support communication with an evolved universal terrestrial radio access network (EUTRAN) and/or other wireless metropolitan area networks (WMAN), a wireless local area network (WLAN), a wireless personal area network (WPAN). Embodiments in which the baseband circuitry 104 is configured to support radio communications of more than one wireless protocol can be referred to as multi-mode baseband circuitry.

RF circuitry 106 can enable communication with wireless networks using modulated electromagnetic radiation through a non-solid medium. In various embodiments, the RF circuitry 106 can include switches, filters, amplifiers, etc. to facilitate the communication with the wireless network. RF circuitry 106 can include a receive signal path which can include circuitry to down-convert RF signals received from the FEM circuitry 108 and provide baseband signals to the baseband circuitry 104. RF circuitry 106 can also include a transmit signal path which can include circuitry to up-convert baseband signals provided by the baseband circuitry 104 and provide RF output signals to the FEM circuitry 108 for transmission.

In some embodiments, not covered by the claims, the RF circuitry 106 can include a receive signal path and a transmit signal path. The receive signal path of the RF circuitry 106 can include mixer circuitry 106a, amplifier circuitry 106b and filter circuitry 106c. The transmit signal path of the RF circuitry 106 can include filter circuitry 106c and mixer circuitry 106a. RF circuitry 106 can also include synthesizer circuitry 106d for synthesizing a frequency for use by the mixer circuitry 106a of the receive signal path and the transmit signal path. In some embodiments, the mixer circuitry 106a of the receive signal path can be configured to down-convert RF signals received from the FEM circuitry 108 based on the synthesized frequency provided by synthesizer circuitry 106d. The amplifier circuitry 106b can be configured to amplify the down-converted signals and the filter circuitry 106c can be a low-pass filter (LPF) or band-pass filter (BPF) configured to remove unwanted signals from the down-converted signals to generate output baseband signals. Output baseband signals can be provided to the baseband circuitry 104 for further processing. In some embodiments, the output baseband signals can be zero-frequency baseband signals, although this is not a requirement. In some embodiments, mixer circuitry 106a of the receive signal path can comprise passive mixers, although the scope of the embodiments is not limited in this respect.

In some embodiments, not covered by the claims, the mixer circuitry 106a of the transmit signal path can be configured to up-convert input baseband signals based on the synthesized frequency provided by the synthesizer circuitry 106d to generate RF output signals for the FEM circuitry 108. The baseband signals can be provided by the baseband circuitry 104 and can be filtered by filter circuitry 106c. The filter circuitry 106c can include a low-pass filter (LPF), although the scope of the embodiments is not limited in this respect.

In some embodiments, not covered by the claims, the mixer circuitry 106a of the receive signal path and the mixer circuitry 106a of the transmit signal path can include two or more mixers and can be arranged for quadrature down-conversion or up-conversion respectively. In some embodiments, the mixer circuitry 106a of the receive signal path and the mixer circuitry 106a of the transmit signal path can include two or more mixers and can be arranged for image rejection (e.g., Hartley image rejection). In some embodiments, not covered by the claims, the mixer circuitry 106a of the receive signal path and the mixer circuitry 106a can be arranged for direct down-conversion or direct up-conversion, respectively. In some embodiments, the mixer circuitry 106a of the receive signal path and the mixer circuitry 106a of the transmit signal path can be configured for super-heterodyne operation.

In some embodiments, not covered by the claims, the output baseband signals and the input baseband signals can be analog baseband signals, although the scope of the embodiments is not limited in this respect. In some alternate embodiments, not covered by the claims, the output baseband signals and the input baseband signals can be digital baseband signals. In these alternate embodiments, the RF circuitry 106 can include analog-to-digital converter (ADC) and digital-to-analog converter (DAC) circuitry and the baseband circuitry 104 can include a digital baseband interface to communicate with the RF circuitry 106.

In some dual-mode embodiments, not covered by the claims, a separate radio IC circuitry can be provided for processing signals for each spectrum, although the scope of the embodiments is not limited in this respect.

In some embodiments, not covered by the claims, the synthesizer circuitry 106d can be a fractional-N synthesizer or a fractional N/N+1 synthesizer, although the scope of the embodiments is not limited in this respect as other types of frequency synthesizers can be suitable. For example, synthesizer circuitry 106d can be a delta-sigma synthesizer, a frequency multiplier, or a synthesizer comprising a phase-locked loop with a frequency divider.

The synthesizer circuitry 106d can be configured to synthesize an output frequency for use by the mixer circuitry 106a of the RF circuitry 106 based on a frequency input and a divider control input. In some embodiments, not covered by the claims, the synthesizer circuitry 106d can be a fractional N/N+1 synthesizer.

In some embodiments, not covered by the claims, frequency input can be provided by a voltage controlled oscillator (VCO), although that is not a requirement. Divider control input can be provided by either the baseband circuitry 104 or the applications processor 102 depending on the desired output frequency. In some embodiments, not covered by the claims, a divider control input (e.g., N) can be determined from a look-up table based on a channel indicated by the applications processor 102.

Synthesizer circuitry 106d of the RF circuitry 106 can include a divider, a delay-locked loop (DLL), a multiplexer and a phase accumulator. In some embodiments, not covered by the claims, the divider can be a dual modulus divider (DMD) and the phase accumulator can be a digital phase accumulator (DPA). In some embodiments, the DMD can be configured to divide the input signal by either N or N+1 (e.g., based on a carry out) to provide a fractional division ratio. In some example embodiments, the DLL can include a set of cascaded, tunable, delay elements, a phase detector, a charge pump and a D-type flip-flop. In these embodiments, the delay elements can be configured to break a VCO period up into Nd equal packets of phase, where Nd is the number of delay elements in the delay line. In this way, the DLL provides negative feedback to help ensure that the total delay through the delay line is one VCO cycle.

In some embodiments, not covered by the claims, synthesizer circuitry 106d can be configured to generate a carrier frequency as the output frequency, while in other embodiments, the output frequency can be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency can be a LO frequency (fLO). In some embodiments, the RF circuitry 106 can include an IQ / polar converter.

FEM circuitry 108 can include a receive signal path which can include circuitry configured to operate on RF signals received from one or more antennas 110, amplify the received signals and provide the amplified versions of the received signals to the RF circuitry 106 for further processing. FEM circuitry 108 can also include a transmit signal path which can include circuitry configured to amplify signals for transmission provided by the RF circuitry 106 for transmission by one or more of the one or more antennas 110.

In some embodiments, not covered by the claims, the FEM circuitry 108 can include a TX / RX switch to switch between transmit mode and receive mode operation, or operate concurrently/simultaneously. The FEM circuitry can include a receive signal path and a transmit signal path. The receive signal path of the FEM circuitry can include a low-noise amplifier (LNA) to amplify received RF signals and provide the amplified received RF signals as an output (e.g., to the RF circuitry 106). The transmit signal path of the FEM circuitry 108 can include a power amplifier (PA) to amplify input RF signals (e.g., provided by RF circuitry 106), a processor and one or more filters to generate RF signals for subsequent transmission (e.g., by one or more of the one or more antennas 110.

In some embodiments, the cell network device 100 can include additional elements such as, for example, one or more processors, memory/storage, display, camera, sensor, and/or input/output (I/O) interface.

Embodiments disclosed herein but not covered by the claims, can be enabled or facilitated by one or more components (e.g., FEM circuitry 108, RF circuitry 106, baseband circuitry 104, or otherwise) of the cell network device 100 to dynamically signal, receive, process, transmit or generate one or more TTIs or S-TTIs. The UEs, after being configured with respective S-TTIs or TTI configurations can then utilize this parameter for the encapsulation or de-capsulation of data with higher layers (or high protocol layers of communication protocol stocks) into frames for transmission on the radio link layer of communication. The TTI or S-TTIs thus refer to the duration of a transmission on the radio link and is related to or an indication of the size of the data blocks passed form higher network layers to the radio link, for example.

One or more of the components of FIG. 1, for example, can generate / process latency reduction capability information that enables assessing what amount of trade-off can be enabled, if any. The trade-off operations can be configured between a UE throughput (e.g., user perceived throughput) and latency, or latency and overhead, for example, in which one can be sacrificed for the other.

Latency reduction capability information can include a different number of shorter or less OFDM symbols by which a UE (e.g., the network device 100) can be capable of or optimized in utilization of TTIs for data transmission / reception. For example, an S-TTI can be configured based on a selection of one of the numbers (or lengths) from among the latency reduction capability information of a UE. The number of OFDM symbols can be less than a standard TTI utilized in 3GPP Release 13 LTE systems, which could be generated / processed for a standard / legacy UE within the cell network at the same time, concurrently or simultaneously as the S-TTI for another UE coupled to an eNB (e.g., 100) in the cell.

In an aspect, the UE 100 communicatively coupled to the eNB 100 in a cell network can jointly determine the configuration (e.g., length) of S-TTIs. The eNB can receive the UE assistance information and the latency reduction capability information with different S-TTI configuration lengths from the UE. Afterwards, the eNB can then utilize this data along with cell-specific information about the network conditions to make an optimal selection of an S-TTI configuration from among the possibilities / options in the latency reduction capability information. In this manner, both the UE and the eNB, which can each have similar, less or more components as the network device 100, can make joint determinations of S-TTI by which to configure for transmission and reception.

The UE assistance information, for example, can include an S-TTI preference indicator ("SPI") field indicating a downlink ("DL") geometry based on a measured reference signal received power ("RSRP") or a reference signal received quality ("RSRQ"). The DL geometry can be categorized or quantized relative to a position with the cell network, which can, for example, map to different measured RSRP or RSRQ values. The UE assistance information can further include a file size (e.g., a TCP file size), or a channel state information ("CSI") feedback rate. In addition, the UE assistance information can include an indication to utilize the standard full-length / legacy TTI, or indicate that the S-TTI is no longer needed based on a determination by the UE as a function of the UE assistance information or other UE specific parameters.

Further, the cell-specific information can include a core network delay or a resource utilization within a cell network. The core network delay can be known based on the network deployment or changing resources and resource utilization can depend on an amount of load or buffer status, or bandwidth utilization or resource utilization rate in a macro cell or other cell network enabled by the eNB, for example.

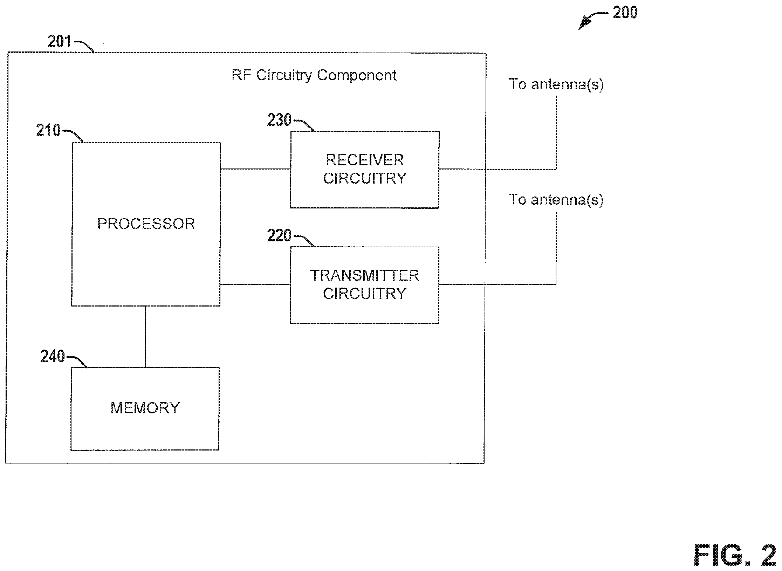

**FIG. 2** further illustrates an embodiment of a network device or system 200 to be employed in an eNB, a UE or other network device that facilitates or enables S-TTIs for data transmissions and reception in an LTE wireless network according to various aspects described herein. System 200 can include a baseband circuitry component, a front end module circuitry, or a radio frequency (RF) circuitry component 201 with a processor 210, transmitter circuitry 220, receiver circuitry 230, and memory 240, which can be similar to the circuitry 104-108 of the network device 100 of **FIG. 1****.** In various aspects, system 200 can be included within an Evolved Universal Terrestrial Radio Access Network (E-UTRAN) Node B (Evolved Node B, eNodeB, or eNB), other base station, network access point, a secondary cell network device (e.g., a small cell, or WiFi network device) or other cell network component/device (e.g., UE) in a wireless communications network. Memory 240 also can include instructions that can be implemented by processor 210, transmitter circuitry 220, and/or receiver circuitry 230 to implement various aspects described herein.

In addition, the memory 240 can comprise one or more machine-readable medium / media including instructions that, when performed by a machine or component herein cause the machine to perform acts of the method or of an apparatus or system for concurrent communication using multiple communication technologies according to embodiments and examples described herein. It is to be understood that aspects described herein can be implemented by hardware, software, firmware, or any combination thereof. When implemented in software, functions can be stored on or transmitted over as one or more instructions or code on a computer-readable medium (e.g., the memory described herein or other storage device). Computer-readable media includes both computer storage media and communication media including any medium that facilitates transfer of a computer program from one place to another. A storage media or a computer readable storage device can be any available media that can be accessed by a general purpose or special purpose computer. By way of example, and not limitation, such computer-readable media can comprise RAM, ROM, EEPROM, CD-ROM or other optical disk storage, magnetic disk storage or other magnetic storage devices, or other tangible and/or non-transitory medium, that can be used to carry or store desired information or executable instructions. Also, any connection is properly termed a computer-readable medium. For example, if software is transmitted from a website, server, or other remote source using a coaxial cable, fiber optic cable, twisted pair, digital subscriber line (DSL), or wireless technologies such as infrared, radio, and microwave, then coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where *disks* usually reproduce data magnetically, while *discs* reproduce data optically with lasers. Combinations of the above should also be included within the scope of computer-readable media. As described in greater detail below, system 200 can facilitate LBT and DL transmission burst with a DRS for LAA operation in the unlicensed frequency band.

Processor 210 can, in accordance with various embodiments described herein, can operate to enable S-TTIs with configurations allowing TTIs with shorter lengths or fewer symbols than a legacy / standard TTI. This enables the TCP packets to be acknowledged faster at the receiver side and faster increases in the TCP window size at the transmitter side of communications, while also contributing to an overall round-trip time reduction. Advantages can also be observed by improvements in overall DL throughput performance, with a trade-off occurring in overhead where control resources are added to exploit latency reductions.

The round-trip delay time (RTD) or round-trip time (RTT) is the length of time it takes for a signal to be sent plus the length of time it takes for an acknowledgment of that signal to be received. This time delay therefore includes the propagation times between the two points of a signal. In one example, where a standard TTI can be about 14 OFDM symbols with an initial TCP window size, the round trip time can be about 9 times larger when compared to an S-TTI comprising about two OFDM symbols, for example.

In another aspect, the processor 210 can enable a dynamic and thus flexible configuration of various lengths of S-TTI depending on the trade-off that a network device (e.g., a UE 200) is capable of. As such, the processor 210 can provide signaling methods to support flexible S-TTIs length configurations by switching / multiplexing between S-TTI configurations to achieve latency reduction targets as well as to improve the UPT performance at the UE as network conditions alter. These dynamic operations can enable S-PDSCH (i.e., PDSCH that is transmitted in S-TTI or configured based on S-TTI) with flexible and optimal S-TTI lengths for each UE among a UEs of a cell network as a function of / based on UE-specific information (e.g., UE geometry, TCP connection file size, CSI feedback rates, or the like) as well as cell-specific information (e.g., system resource utilization, core network delay, buffer load, or the like) in a different time scale.

In one example, a set of S-TTI length configurations can be configured by means of system information, a UE-specific dedicated RRC message, a modified MAC control element, or a PDCCH transmitted on common search space (CSS) or UE common search space (USS). Alternatively or additionally, a new downlink control information (DCI) format can be generated / processed for transmission / reception on S-PDCCH (PDCCH based on the S-TTI), which can be further used to select from among pre-configured or communicated options for S-TTI length configurations. The selection of the S-TTI length or configurations indicating the S-TTI can be generated according to assistance information (Al) that can be sent together with the UE's capability of supported S-TTI configurations to further facilitate (or enable) the eNB in selection of an appropriate S-TTI length based on network information.

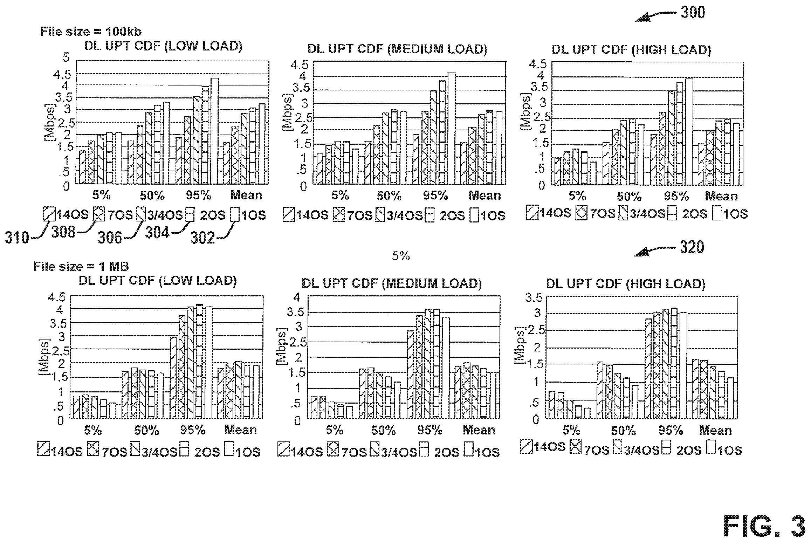

**FIG. 3** illustrates an example of parameters for consideration in selecting S-TTI configurations in accordance with various aspects disclosed. UEs within a cell network can have different parameters that can be optimized such as with latency and amount of DL data with S-TTI, which can affect the trade-off between latency and throughput. Therefore, enabling sufficient scheduling flexibility in S-TTI length selection can thereby dynamically control the tradeoff between overhead and latency reduction for receiving HARQ, as well as communicating TCP ACKs as a result.

In order to provide signaling methods to support flexible S-TTIs length configurations and achieve latency reduction targets as well as to improve the UPT performance, a number of candidate S-TTI lengths, for example, can be generated / processed by network devices (e.g., network device 100 or 200), including 1, 2, 3, 4 and 7 symbol options (represented by hashed sections 302-308), as compared to a standard number such as with 12 or 14 symbols (as represented by hashed sections 310), despite a tradeoff with overhead.

**FIG. 3** illustrates, for example, two different sets of graphs / charts 300 and 320 with different TCP file transmission sizes, 100 kb and 1 MB, respectively for comparison, in which each graph among the sets 300 and 320 vary based on an amount of DL UPT cumulative distribution function loads (low, medium and high relatively). Additionally, the UE geometry or relative location within a cell is summarized in percentiles: the 5% being Cell-Edge UEs, 50%, 95% percentile (Best Users) and average user perceived throughput (UPT) performance (expressed in Mbps) for different S-TTIs lengths to be illustrated within each graph. The sets of graphs 300 and 320 are further divided between an amount of network load with 20% (low load), 40% (Medium load) and 60% (high load) for resource utilization (RU) in a macro cell scenario, for example, or other tiered percentage of network load based on an entire / total network load.

As illustrated in **FIG. 3****,** UPT performance resulting from S-TTI can depend on various factors such as UE-specific parameters including TCP file size (the size of transmission in response to TCP connection), UE geometry (relative location or orientation within the cell area) and channel state information (CSI) feedback rate, as well as system-specific parameters such as resource utilization (RU) and core network delay. For example, UEs with higher achievable throughput (e.g. 95^{th} percentile) can benefit more from S-TTI than UEs with lower throughput (e.g. 5^{th} percentile). As such, generating S-TTI can be utilized for these UEs as to where modifying or adding to the overhead for UEs in the 5^{th} percentile could be prevented so that legacy or standard TTI lengths can be still utilized and not further burden these UEs. For most UEs among a cell network, significant gains can be achieved at low load with shortened TTI, when there are enough available radio resources for the UEs (e.g., low load). Larger gains can also be possible with 2 symbols TTI 304 than with 7 symbols TTIs 308. However, the worst users or UEs (e.g., the 5^{th} percentile) whose performance is throughput-limited do not necessarily benefit greatly from the latency reduction offered by S-TTIs and can experience a degraded performance due to the larger overhead introduced to implement the S-TTIs.

In an aspect, the S-TTI length for a given UE within a cell can be jointly selected by the eNB and UE. The UE (e.g., 100) can take into account the UE- specific factors such as UE assistance information and determine latency reduction capability information. The UE assistance information can include a TCP file/data transmission size, UE geometry within the network, CSI feedback rates, or an indication of whether a standard TTI configuration is preferred. The latency reduction capability information can comprise selections from the UE as to a number of OFDM symbols to configure S-TTI. Possible configurations selected by the UE can include one or more selections from S-TTI configurations with different and shorter numbers of OFDM symbols (OS), such as one, two, three, four, or seven (e.g., OS 302-308), for example, which can be based on the UE-specific parameters, the UE assistance information, or the sets of graphs / charts 300 and 320 and the data therein.

The UE geometry can be based on measured reference signal received power (RSRP) or a reference signal received quality (RSRQ) as measured by the UE 100, and can represent a relative position within a cell network by which quality of experience (QoE) can be determined or throughput is affected. These and other UE-specific factors can be included in communications from the UE (e.g., network device 100) to the eNB (e.g., network device 200) with an indication as to whether S-TTI is preferred or not. For example, an S-TTI preference indicator (SPI) can indicate a DL geometry of the UE 100 based on the RSRP / RSRQ, an indication to utilize the standard TTI over the S-TTI, a file size (TCP layer file size), or a channel state information (CSI) feedback rate. If a UE 100 experiences high load or a load in the upper percentile of UEs that are communicatively coupled to the same cell network, then the UE could opt to indicate a standard TTI for configuration of data communications.

The eNB 200 can further operate to receive the UE latency reduction capability information from the UE 100 and further utilize cell-specific information together with the UE assistance information to make a final determination of which S-TTI configuration from among the latency reduction capability information will be configured for data transmission or reception. Cell-specific information can include load size (small, medium and large), which can be based on a percentile (e.g., greater than or less than 60% and 40%) of the bandwidth (e.g., 10Mhz or otherwise), a traffic mode of operation, and a load at the buffer with respect to a rate of communication or of resource utilization rate (bits/second). Cell-specific information (or system specific parameters) can also include core network delays or other network quality of service (QoS) parameters, for example.

In one example, the UE (e.g., 100), communicatively coupled to an eNB (200), can transfer its latency reduction capability information comprising of a list (or data set) of supported S-TTI configurations (i.e. lengths) to the network at the time of an RRC connection establishment. Further, S-TTI configurations (and a TTI configuration) supported in DL and UL for a particular UE (e.g., network device 100) can be different and can be indicated separately or independently from one another. To assist the eNB (e.g., network device 200) in selection of an appropriate S-TTI length or TTI length, some assistance information can be sent together by the UE 100. As stated above, the assistance information can include an S-TTI SPI, which is associated with DL geometry of the UE based on the measured RSRP and RSRQ. The assistance information can also be used to inform eNB 200 that the UE 100, for example, no longer prefers or needs the S-TTI in some cases, in which the SPI can have an indicator to select or opt for legacy or standard TTIs (e.g., of 12 or 14 OFDM symbols at 1ms or a set time window).

In addition, one or more supported DL or UL S-TTI configurations can be configured respectively for the UE 100 through dedicated RRC signaling at the beginning of setup of a RRC connection, and can be altered, modified or reconfigured by higher layers or the eNB 200, for example, according to changing network or UE conditions. For example, transmission can include DL and UL indicators with an S-TTI configuration command indicated which S-TTIs are to be utilized for a particular UE such as with 1, 2, 3, 4, or 7 OFDM symbols within a window of time subject to the reported S-TTI capability of a given UE.

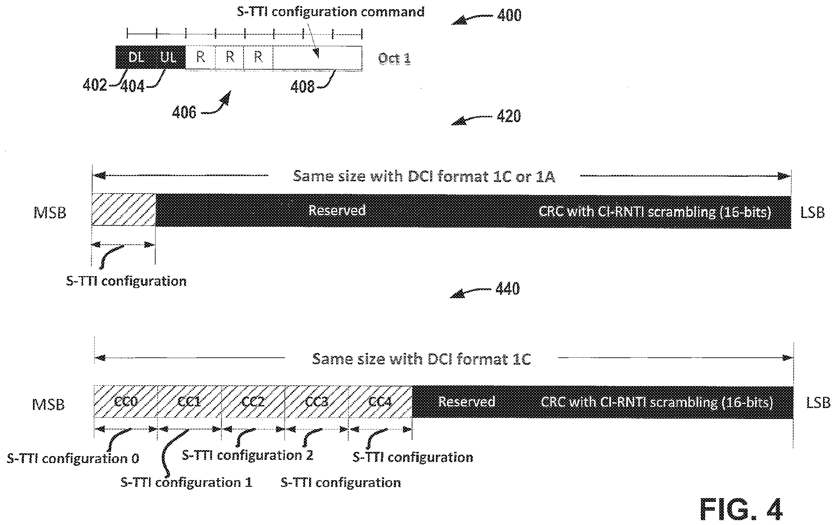

Referring to **FIG. 4****,** illustrated is an example of S-TTI configuration communication formats or information elements in accordance with various aspects disclosed. The communications 400, 420 and 440 illustrate possible configurations or formats for the eNB 200 to generate and signal to the UE 100. The UE 100 can then generate data for transmission or conduct data reception in accordance with the indicated S-TTI configurations.

In utilizing the possible S-TTI configurations, various schemes can operate to generate a flexible S-TTI length switching and multiplexing between different S-TTI lengths for operating latency reduction techniques in a different time scale than standard TTIs. As such, for TTI switching for FDD and TDD component carriers (CCs), a particular DL S-TTI / UL S-TTI configuration can be independently / separately selected for use from among different S-TTI configurations (e.g. 7-symbols, 4-symbols, 3-symbols or 2-symbols) supported by a given UE by means of Radio Resource Control (RRC) messages as disclosed above, as well as support for legacy standard TTI configurations.

In one example, a communication 400 can include one pair of S-TTI configurations corresponding to a DL and UL (e.g., DL bit 402, and UL bit 404) as <one DL S-TTI, one UL S-TTI> that can be configured for a given UE100, for example, by higher layers or using a Medium Access Control (MAC) layer Control Element (CE). A zero at each bit 402, 404, for example, can mean a legacy TTI or standard TTI configuration is applied for both DL and UL. The UE 100 can apply the respective DL/UL S-TTI if it is available or capable according to the latency reduction capability information selected by the UE 100 or preconfigured. Otherwise, if the UE 100 is not capable of S-TTI or if a standard TTI is preferred / selected by the UE 100 based on the UE assistance information, the UE 100 can apply a default TTI configuration (e.g. Legacy TTI or an S-TTI fixed in specification or broadcasted through system information).

The communication signal 400 can be an information element that supports TTI switching or various S-TTIs for FDD and TDD on a per component carrier basis. For example, one DL S-TTI or UL S-TTI configuration can be signaled by using a MAC CE 400. The MAC layer CE can be identified by a MAC packet data unit (PDU) subheader with a logical channel identifier (LCID) and one or more information elements (IEs) corresponding to the DL 402, the UL 404 and one or more selections of S-TTI configurations of different length as latency reduction capability information based on the set of UE assistance information such as indicated in the command bits 408 (e.g., one or more LSB bits) or as a command to implement to the UE 100 as selected by the eNB 200. The S-TTI configuration MAC CE can be identified by a MAC PDU subheader with a LCID, and can also have a fixed size comprising of a single octet.

The DL field 402 can be configured to indicate the indicated S-TTI configuration application for DL. The field 402 can be set to "1" to indicate that the indicated S-TTI configuration is applied for DL. The field can be set to "0" to indicate that the indicated S-TTI configuration shall not be applied for DL.

The UL field 404 can be configured to indicate the indicated S-TTI configuration application for UL. The field can be set to "1" to indicate that the indicated S-TTI configuration is applied for UL; otherwise, it is not applied for UL.

The R field(s) 406 can be one or more reserved bits, set to "0". The S-TTI configuration command 408 field can be configured to indicate one of supported S-TTI configurations for support latency reduction operation. The length of the S-TTI can depend on the number of supported S-TTI configurations as provide by the latency reduction capability information from the UE, for example, which are shorter or less OFDM symbols than a standard TTI.

In one embodiment, not covered by the claims, the communication 420 or 440 can alternatively or additionally be utilized for supporting TTI switching, in which one DL S-TTI or UL S-TTI configuration can be signaled by using DCI formats, or a combination of RRC messages and DCI formats to achieve a faster TTI switching from among S-TTI configurations.

In another embodiment, one or more S-TTI configurations can be broadcasted by the eNB 200 through system information, while UEs can be capable of latency reduction that supports all S-TTIs configurations. In this aspect, the eNB 200 operates as the primary determiner of which S-TTI length to configure with any one UE that is preconfigured by such specification.

In another embodiment, a list of supported S-TTI configurations can be transferred from a UE to an eNB. In response to receiving the supported S-TTI configuration or possible lengths for a given UE, the eNB can configure a set of UE-specific S-TTI configurations for the UE in accordance with its S-TTIs capability through dedicated RRC message, taking into account relevant influence factors such as UE specific DL geometry and the file size as well as system resource utilization, or other parameters, for example.

In response to a UE being configured by higher protocol layers than a TCP layer with latency reduction via S-TTI, the UE 100, for example, can determine the S-TTI configuration for each subframe (i.e., each 1ms window) by decoding PDCCHs with the cyclic redundancy check (CRC) scrambled by the latency reduction radio network temporary identifier (LR-RNTI) according to the combination defined in Table 1 below without increasing a number of blind decodes by the UE.

**TABLE 1: PDCCH configured by LR-RNTI**

| | DCI format | Search Space |
|---|---|---|
| Option 1 | DCI format 1C | Common |
| Option 2 | DCI format 1A | UE-specific |

Various designs of DCI format 1C or 1A can be used to support S-TTI switching operations from among different numbers of OFDM symbols therein. The different DCI formats and search spaces can enable more efficient and faster S-TTIs switching depending upon the capabilities. An S-TTI configuration indication can be transmitted from the eNB to the UE, by means of a DCI format 1C on common search space (CSS) or DCI format 1A on UE-specific search space (USS) as illustrated in **FIG.4** with data communication transmissions 420 and 440. Depending on the network conditions, the formats can be varied by the eNB 200, for example. Zeros are added until the size is equal to that of format 1C used for compact scheduling of one PDSCH or DCI format 1A, in order to keep the communication size the same.

Each indicated S-TTI length can applied within one subframe, such as the subframe that it is indicated within. An advantage of using the option 2 in Table 1 with DCI format 1A on USS is that different UE-specific S-TTI lengths can be configured for different UEs with being encoded into separate DCI formats 1A. However, it also results in a larger DL control overhead when signaling a plurality of different UEs with different S-TTIs.

For a carrier aggregation (CA) case, as illustrated in communication 440 in which the UE 100 is utilizing carrier aggregation in communications, more than S-TTI configuration fields can be included into one DCI format 1C or 1A and each field can be used to indicate a S-TTI configuration for a respective CC, for example. The association between a CC and the correspondingly S-TTI configuration field of one DCI format can be configured by a UE dedicated RRC message, for example, so that each CC can configure a different S-TTI based on the selection of the eNB jointly or independently of UE assistance information with latency capability reduction information by utilizing a single DCI format without additional signaling overhead.

In another embodiment, not covered by the claims, the UE (e.g., UE 100 or otherwise) configured with latency reduction can be configured to monitor DCI format 1C with CRC scrambled by LR-RNTI or 1A with CRC scrambled by C-RNTI on the legacy PDCCH region in each non-DRX DL subframe. If the UE 100 detects PDCCH with CRC scrambled by LR-RNTI in a subframe n, the S-TTI length for this subframe n is given by the S-TTI configuration indication signaled on the PDCCH. The UE 100 can then monitor PDCCH in each S-TTI within the subframe n for S-PDSCH (i.e. PDSCH transmitted in S-TTI) reception according to the indicated S-TTI configuration. Otherwise, one default TTI length (e.g. Legacy TTI or an S-TTI fixed in specification or broadcasted through system information) is applied for subframe n and UE is not expected to monitor PDCCH in any S-TTI within subframe n. In this manner, the UE 100 or components thereat can operate to monitor S-PDCCH and further operate to turn on and off utilization / operation of S-TTI among subframes based on the presence of PDCCH.

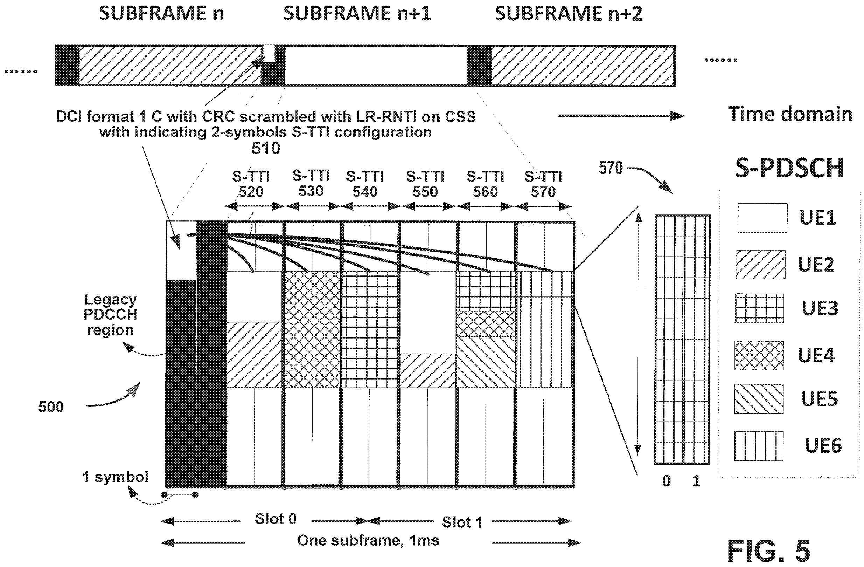

**FIG. 5** illustrates an example of a cell-specific S-TTI configuration signaling format in accordance with various aspects described herein. The UE 100 that is configured with latency reduction via one or more S-TTI configurations from the eNB 200, for example, can also be configured to monitor DCI format 1C with CRC scrambled by LR-RNTI 510, or 1A with CRC scrambled by a cell RNTI (C-RNTI) on the legacy PDCCH region 500 in each non-discontinuous reception (non-DRX) DL subframe (e.g., n, n+1, n=2, etc.). For example, if the UE 100 detects PDCCH with CRC scrambled by LR-RNTI 500 in a subframe n, the S-TTI length for this subframe n is given by the S-TTI configuration indication signed on the PDCCH. The UE 100 is configured to then monitor PDCCH in each S-TTI within subframe n for S-PDSCH (i.e. PDSCH transmitted in S-TTI) reception according to the indicated S-TTI configuration. Otherwise, a default TTI length (e.g. legacy / standard TTI or an S-TTI fixed in specification or broadcasted through system information) can be applied for subframe n and the UE can implement TTI / S-TTI not expected to monitor PDCCH for any S-TTI being indicated within a subframe (e.g., subframe n).

The example cell-specific S-TTI configuration can indicate on / off with respect to one or more S-TTI configurations or symbol lengths by using the PDCCH region 500 on CSS. As shown in **FIG.5****,** the PDCCH 500 with CRC scrambled by LR-RNTI can be transmitted on the CSS of a legacy PDCCH region 500 in subframe n+1 to indicate the S-TTI configuration (e.g., 2-symbols, or other number) within this subframe. Each UE (i.e. UE1∼UE6 in FIG.5) can be configured with latency reduction functionality as indicated by the PDCCH region (e.g., 500 within each subframe of a transmission communication of multiple subframes) and can prompt the UEs (e.g., UE1∼UE6) to then further monitor the S-PDCCH (PDCCH with S-TTI or generated based on S-TTI) in each S-TTI 520∼570 for potential 2-symbol S-PDSCH transmissions or PDSCH transmissions based on the indicated S-TTI, for example. As a DCI format 1C (e.g., 510) with CRC scrambled with LR-RNTI is not present on CSS of subframe n and n+2, the UEs would assume legacy TTI length is applied for these subframes and not perform monitoring for S-PDCCH within these subframes.

In another aspect, multiple different S-TTI configurations for one or more UEs (e.g., UE1∼UE6) can be configured in a DCI format 1C 510 with CRC scrambled by LR-RNTI, or alternatively by DCI format 1A with CRC scrambled by C-RNTI on the legacy PDCCH region 500. For example, an X-bit bitmap field can be included in a DCI format 1C on CSS for multiple UEs or 1A on USS for a particular UE 100, where each bit represents a different S-TTI length configuration. This can be seen somewhat in the blow up region of the subframe n for S-TTI 570 corresponding to UE 6, for example. Each symbol of the two symbols being used for S-TTI indication of a configuration can indicate a different configuration or number of symbols by which to configure TTI (e.g., with the bits 0 1).

In another embodiment, multiple S-TTI configurations can be configured by the eNB 200 generating the S-TTI signaling through system information or a dedicated RRC message. In addition, one compact DCI format transmitted in PDCCH within each S-TTI (i.e. S-PDCCH) could also be used to indicate to the UE 100 one configuration from the set of S-TTIs previously configured by using an S-TTI configuration indication field or bit field where the formatted region 510 of the PDCCH 500 indicates the field as corresponding within the subframe to the particular UE.

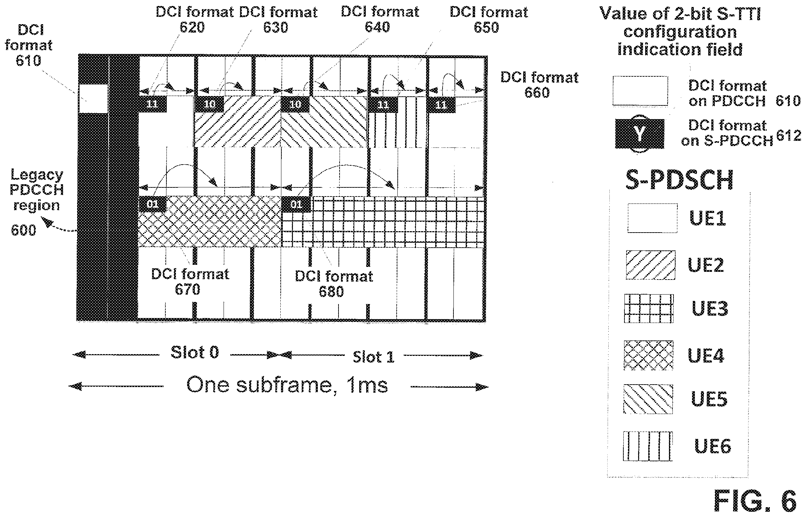

**FIG. 6** further illustrates a flexible S-TTI configuration format for UEs (UE1∼UE6) can also be used to accommodate different geometries within the cell network and further enable various S-TTI configurations to be applied rather than only one set S-TTI after latency reduction operation is enabled.

In one aspect, multiple S-TTI configurations can be configured by a DCI format (e.g., 610) 1C with CRC scrambled by LR-RNTI, or 1A with CRC scrambled by C-RNTI on a legacy PDCCH region (e.g., 600) or area of the subframe that is designated for PDCCH. In one example, an X-bit bitmap field (e.g., 612) can be included in the DCI format 1C on CSS for multiple UEs or 1A on USS for a particular UE 100, where each bit represents a different S-TTI length configuration. In another embodiment, multiple S-TTI configurations can be configured by eNB through system information or a dedicated RRC message. In addition, one compact DCI format transmitted in PDCCH within each S-TTI (i.e. S-PDCCH) can also be used to indicate to a UE one from the set of S-TTIs previously configured by using the S-TTI configuration indication field 612.

In one embodiment illustrated in Table 2 below, four S-TTIs configurations, including legacy or a standard configuration of 12 / 14 OFDM symbols (i.e., designated as 1^{st} TTI length configuration in Table 2), 7-symbols (i.e., 2^{nd} S-TTI length configuration), 3-symbols (3^{rd} S-TTI length configuration) and 2-symbols S-TTI lengths (4^{th} S-TTI length configuration), can be signaled through DCI format 410 on PDCCH or an RRC message (e.g., either as a system information (e.g., a system information block (SIB)) or a UE dedicated RRC message. Other indications can be mapped to correspond with different, additional or less configurations, for example, and as one of ordinary skill in the art can appreciated is not limited to the mappings indicated only with Table 2.

**Table 3: Value of S-TTI Length Indication (SLI) field for S-TTI configuration switching**

| Value of SLI field | S-TTI length configuration |
|---|---|
| '00' | The 1^{st} S-TTI length configured by higher layers or PDCCH |
| '01' | The 2^{nd} S-TTI length configured by higher layers or PDCCH |
| '10' | The 3^{rd} S-TTI length configured by higher layers or PDCCH |
| '11' | The 4^{th} S-TTI length configured by higher layers or PDCCH |

As an example of the DCI format 610, a 4-bit bitmap information field / information element (IE) 612 can be included in the DCI format 610 1C on CSS or a DCI format 1A on USS. Each bit within the bitmap IE 612 as a region within the corresponding symbols of a UE (e.g., 620-680) can represent a respective S-TTI length configuration. The mapping between one bit within a bitmap and the corresponding S-TTI length configuration can be pre-known by the UE 100 and the eNB 200, which can be fixed in 3GPP specification or configured by higher layers. Alternatively, the mapping can be independently signaled, and is not limited to any one specific embodiment for signaling the specification.

In the example of **FIG. 6****,** similar to the DCI region 510 the region 610 can indicate the format being utilized and the S-PDSCH with number of symbols being utilized within the particular subframe. The UE1, for example, can receive DCI formats 620 and 650 with setting the value of S-TTI Length Indication (SLI) field as "11" to indicate that 2-symbols S-TTI can be utilized for S-PDSCH transmission. DCI formats 630 and 640 with SLI = "10" setting can be sent / correspond to UE2 and UE5 to indicate 3-symbols S-TTI length is used for the corresponding S-PDSCH transmissions. Similarly, the value of SLI field can be set to "01" for UE3 and UE4 to indicate that 7-symbols S-PDSCH is being transmitted via the DCI formats 670 and 680, for example.

In one embodiment, not covered by the claims, for example, the eNB can generate S-TTIs in a first DCI format via a first PDCCH region 610 within a subframe of subframes corresponding to a transmission communication, or via broadcasted system information, or via a UE dedicated RRC message. A second DCI format can be generated in a second PDCCH region (e.g., 620-680) configured within the subframe of subframes, wherein the second DCI format comprises an S-TTI configuration indication field that indicates which UEs of a cell network correspond to which S-TTIs.

In another aspect, in the DCI format content design that is transmitted on PDCCH (e.g. DCI format 610) a hybrid automatic repeat request - acknowledgement (HARQ-ACK) resource indication IE can be included in DL DCI format on PDCCH to indicate one PUCCH resource for HARQ-ACKs feedback associated with multiple S-PDSCHs transmitted in a same subframe. The DCI format 610 transmitted on legacy PDCCH region in a subframe n, for example, could be valid starting from the first PDSCH symbol in subframe n.

In one example, the eNB can generate or the UE process, in the second DCI format (e.g., 620), a HARQ process ID IE to indicate a HARQ process number of data transmission. The HARQ process number (HPN) is one term used in 3GPP specification e.g. TS 36.213, for example. LTE network devices, for example, can use multiple parallel HARQ processes with different process IDs. For a UE, each PDSCH transmission can be associated with one unique HPN. At the receiver side, a UE can perform soft combining of initial date packet and retransmission when they are associated with a same HPN. For FDD systems, LTE network devices can use 8 HARQ parallel process having unique process IDs 0, 1, 2...7 (3 bits reserve for HARQ Process ID in DCI Messages) for PDSCH transmissions.

According to some examples of this disclosure, one HARQ process ID IE / PUCCH Transmission Power Control (TPC) IE can be conditionally included in the DL DCI formats (e.g., the second DCI formats or DCI formats 620-680) transmitted in S-PDCCH for S-PDSCH transmission. More specifically, a resource indication field could be transmitted in PDCCH (e.g., DCI format 610) in subframe n to indicate the position in frequency and/or in time for monitoring possible DCI format 610 in the same subframe n to simplify blind decoding complexity at the UE while still keeping sufficiently enough flexibility for S-PDSCH scheduling.

In addition, some IEs may be included in DCI format for UL grant in S-PDCCH to jointly indicate an UL S-TTI length of S-PUSCH and its reference signal position. More specifically, like DL, more than one UL S-TTI resource block zones (S-RBZ) can be first allocated by UL grants transmitted on PDCCH region in subframe n. Subsequently, an S-RBZ identifier index IE can also be added into UL grants transmitted on S-PDCCH in DL subframe n to schedule S-PUSCH transmissions in the corresponding S-RBZ in the associated UL subframe.

The various disclosed embodiments can be used for monitoring DCI formats transmitted in S-PDCCH. In one example, UE can be required to monitor a set of S-PDCCH candidates in each OFDM symbol on a set of RBs. These particular RBs can be indicated by the DCI format on PDCCH of the same subframe. Alternatively, the S-TTI candidates to monitor S-PDCCH equals to the shortest S-TTI length defined for TTI shortening. In another example, the S-TTI candidates to monitor S-PDCCH can be dynamically signaled by means of DCI format 610 transmitted on PDCCH of the same subframe.

While the methods described within this disclosure are illustrated in and described herein as a series of acts or events, it will be appreciated that the illustrated ordering of such acts or events are not to be interpreted in a limiting sense. For example, some acts may occur in different orders and/or concurrently with other acts or events apart from those illustrated and/or described herein. In addition, not all illustrated acts may be required to implement one or more aspects or embodiments of the description herein. Further, one or more of the acts depicted herein may be carried out in one or more separate acts and/or phases.

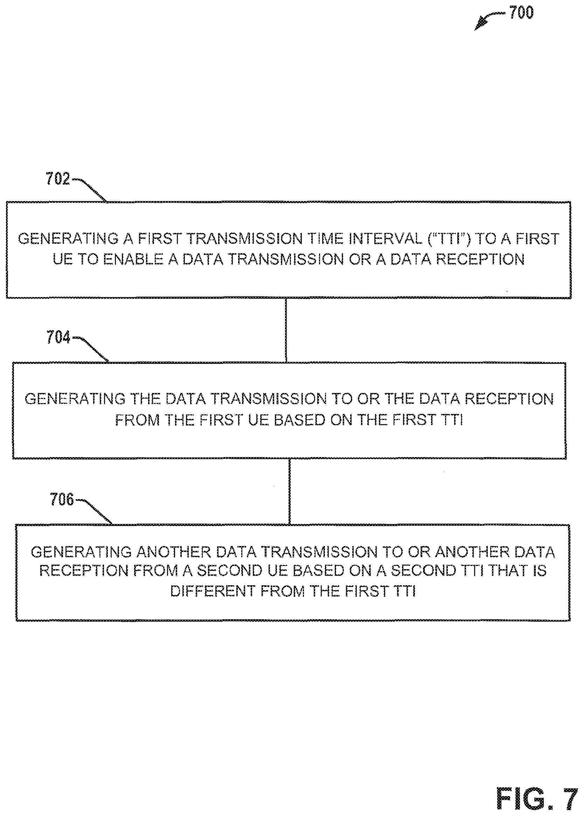

Referring to **FIG. 7****,** illustrated is an example process flow for processing (e.g., via UE) or generating (e.g., via eNB) S-TTIs for data transmissions or receptions. The process flow can be implemented in an eNB or as similar operations in a UE, for example, which can be executed via computer executable instructions on a tangible computer readable medium. The method 700 initiates at 702 with generating a first transmission time interval for a first UE to enable a data transmission or a data reception via the TTI (e.g., an S-TTI).

At 704, data transmission to or the data reception from the first UE can be generated/ transmitted / processed / received based on the first TTI.

At 706, the eNB can generate another data transmission to or another data reception from a second UE based on a second TTI that is different from the first TTI.

The second TTI, for example, can comprise a standard TTI utilized in 3GPP Release 13 LTE systems, and the first TTI can comprise a shortening / shortened TTI (or S-TTI) with fewer OFDM symbols in number being utilized than the second TTI.

The method can further include generating (by the first UE) or processing (via the eNB) latency reduction capability information comprising a plurality of S-TTI configurations that include different numbers of OFDM symbols that are fewer than the second TTI, as well as UE assistance information related to the first UE. The eNB (e.g., network device 200) can select an S-TTI configuration from among the S-TTI configurations based on the set of UE assistance information.

The method 700 can also include generating or processing a third TTI to the first UE, in which the first TTI and the third TTI are different from one another and correspond to S-TTI configurations supported in DL communications and uplink (UL), respectively, in separate information elements, for example. The S-TTI configurations corresponding to DL communication or UL communication can be generated or processed via at least one of: a medium access control layer control element or a radio resource control, for example, or broadcasted via a system information message.

The first TTI can be generated or transmitted via a first downlink control information format on a PDCCH region within a subframe of subframes corresponding to a transmission communication that enables application of the first TTI within the subframe of subframes. The first DCI format comprises a DCI format 1C with CRC scrambled by an LR-RNTI on a common search space of the PDCCH, or a DCI format 1A with the CRC scrambled by a C-RNTI on a UE-specific search space of the PDCCH region.

Multiple S-TTI configurations can further be provided in the first DCI format via the first PDCCH region (e.g., 510 or 610) within a subframe of subframes corresponding to a transmission communication, through broadcasted system information, or a UE dedicated RRC message. A second DCI format (e.g., 620-680) can be configured in a second PDCCH region configured based on the first TTI within the subframe of subframes, wherein the second DCI format indicates which S-TTI from among the plurality of S-TTI configurations comprise the first TTI via an S-TTI configuration indication field or IE.

In other embodiments, not covered by the claims, the method 700 can include generating a hybrid automatic repeat request - acknowledgement (HARQ-ACK) resource indication IE in the first DCI format for DL communications on the first PDCCH region to indicate a PUCCH resource corresponding to an HARQ-ACK feedback associated with multiple PDSCH regions transmitted in the plurality of S-TTI configurations in the subframe among multiple subframes. The transmission subframes can also include at least one of: a HARQ process ID IE or a PUCCH transmission power control ("TPC") IE in the second DCI format for DL communications.

Examples herein can include subject matter such as a method, means for performing acts or blocks of the method, at least one machine-readable medium including executable instructions that, when performed by a machine (e.g., a processor with memory, an application-specific integrated circuit (ASIC), a field programmable gate array (FPGA), or the like) cause the machine to perform acts of the method or of an apparatus or system for concurrent communication using multiple communication technologies according to embodiments and examples described.

It is to be understood that aspects described herein can be implemented by hardware, software, firmware, or any combination thereof. When implemented in software, functions can be stored on or transmitted over as one or more instructions or code on a computer-readable medium. Computer-readable media includes both computer storage media and communication media including any medium that facilitates transfer of a computer program from one place to another. A storage media or a computer readable storage device can be any available media that can be accessed by a general purpose or special purpose computer. By way of example, and not limitation, such computer-readable media can comprise RAM, ROM, EEPROM, CD-ROM or other optical disk storage, magnetic disk storage or other magnetic storage devices, or other tangible and/or non-transitory medium, that can be used to carry or store desired information or executable instructions. Also, any connection is properly termed a computer-readable medium. For example, if software is transmitted from a website, server, or other remote source using a coaxial cable, fiber optic cable, twisted pair, digital subscriber line (DSL), or wireless technologies such as infrared, radio, and microwave, then coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while *discs* reproduce data optically with lasers. Combinations of the above should also be included within the scope of computer-readable media.

Various illustrative logics, logical blocks, modules, and circuits described in connection with aspects disclosed herein can be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform functions described herein. A general-purpose processor can be a microprocessor, but, in the alternative, processor can be any conventional processor, controller, microcontroller, or state machine. A processor can also be implemented as a combination of computing devices, for example, a combination of a DSP and a microprocessor, a plurality of microprocessors, one or more microprocessors in conjunction with a DSP core, or any other such configuration. Additionally, at least one processor can comprise one or more modules operable to perform one or more of the s and/or actions described herein.

For a software implementation, techniques described herein can be implemented with modules *(e.g.,* procedures, functions, and so on) that perform functions described herein. Software codes can be stored in memory units and executed by processors. Memory unit can be implemented within processor or external to processor, in which case memory unit can be communicatively coupled to processor through various means as is known in the art. Further, at least one processor can include one or more modules operable to perform functions described herein.

Techniques described herein can be used for various wireless communication systems such as CDMA, TDMA, FDMA, OFDMA, SC-FDMA and other systems. The terms "system" and "network" are often used interchangeably. A CDMA system can implement a radio technology such as Universal Terrestrial Radio Access (UTRA), CDMA1800, *etc.* UTRA includes Wideband-CDMA (W-CDMA) and other variants of CDMA. Further, CDMA1800 covers IS-1800, IS-95 and IS-856 standards. A TDMA system can implement a radio technology such as Global System for Mobile Communications (GSM). An OFDMA system can implement a radio technology such as Evolved UTRA (E-UTRA), Ultra Mobile Broadband (UMB), IEEE 802.11 (Wi-Fi), IEEE 802.16 (WiMAX), IEEE 802.18, Flash-OFDM, *etc.* UTRA and E-UTRA are part of Universal Mobile Telecommunication System (UMTS). 3GPP Long Term Evolution (LTE) is a release of UMTS that uses E-UTRA, which employs OFDMA on downlink and SC-FDMA on uplink. UTRA, E-UTRA, UMTS, LTE and GSM are described in documents from an organization named "3rd Generation Partnership Project" (3GPP). Additionally, CDMA1800 and UMB are described in documents from an organization named "3rd Generation Partnership Project 2" (3GPP2). Further, such wireless communication systems can additionally include peer-to-peer (*e.g.,* mobile-to-mobile) *ad hoc* network systems often using unpaired unlicensed spectrums, 802.xx wireless LAN, BLUETOOTH and any other short- or long- range, wireless communication techniques.

Single carrier frequency division multiple access (SC-FDMA), which utilizes single carrier modulation and frequency domain equalization is a technique that can be utilized with the disclosed aspects. SC-FDMA has similar performance and essentially a similar overall complexity as those of OFDMA system. SC-FDMA signal has lower peak-to-average power ratio (PAPR) because of its inherent single carrier structure. SC-FDMA can be utilized in uplink communications where lower PAPR can benefit a mobile terminal in terms of transmit power efficiency.

Moreover, various aspects or features described herein can be implemented as a method, apparatus, or article of manufacture using standard programming and/or engineering techniques. The term "article of manufacture" as used herein is intended to encompass a computer program accessible from any computer-readable device, carrier, or media. For example, computer-readable media can include but are not limited to magnetic storage devices (*e.g.,* hard disk, floppy disk, magnetic strips, *etc*.), optical disks (*e.g.,* compact disk (CD), digital versatile disk (DVD), *etc*.), smart cards, and flash memory devices (*e.g.,* EPROM, card, stick, key drive, *etc*.). Additionally, various storage media described herein can represent one or more devices and/or other machine-readable media for storing information. The term "machine-readable medium" can include, without being limited to, wireless channels and various other media capable of storing, containing, and/or carrying instruction(s) and/or data. Additionally, a computer program product can include a computer readable medium having one or more instructions or codes operable to cause a computer to perform functions described herein.

Communications media embody computer-readable instructions, data structures, program modules or other structured or unstructured data in a data signal such as a modulated data signal, e.g., a carrier wave or other transport mechanism, and includes any information delivery or transport media. The term "modulated data signal" or signals refers to a signal that has one or more of its characteristics set or changed in such a manner as to encode information in one or more signals. By way of example, and not limitation, communication media include wired media, such as a wired network or direct-wired connection, and wireless media such as acoustic, RF, infrared and other wireless media.

Further, the actions of a method or algorithm described in connection with aspects disclosed herein can be embodied directly in hardware, in a software module executed by a processor, or a combination thereof. A software module can reside in RAM memory, flash memory, ROM memory, EPROM memory, EEPROM memory, registers, a hard disk, a removable disk, a CD-ROM, or any other form of storage medium known in the art. An exemplary storage medium can be coupled to processor, such that processor can read information from, and write information to, storage medium. In the alternative, storage medium can be integral to processor. Further, in some aspects, processor and storage medium can reside in an ASIC. Additionally, ASIC can reside in a user terminal. In the alternative, processor and storage medium can reside as discrete components in a user terminal. Additionally, in some aspects, the s and/or actions of a method or algorithm can reside as one or any combination or set of codes and/or instructions on a machine-readable medium and/or computer readable medium, which can be incorporated into a computer program product.

In particular regard to the various functions performed by the above described components (assemblies, devices, circuits, systems, *etc*.), the terms (including a reference to a "means") used to describe such components are intended to correspond, unless otherwise indicated, to any component or structure which performs the specified function of the described component, even though not structurally equivalent to the disclosed structure which performs the function in the herein illustrated exemplary implementations of the disclosure. In addition, while a particular feature may have been disclosed with respect to only one of several implementations, such feature may be combined with one or more other features of the other implementations as may be desired and advantageous for any given or particular application.

## Claims

1. An apparatus configured to be employed within a user equipment, UE (100), comprising one or more processors (210) configured to:
generate a UE capability information, wherein the UE capability information comprises a list of shortened transmission time interval, S-TTI, configurations supported by the UE (100);
transmit the UE capability information to an evolved NodeB, eNB (200);
receive, from the eNB (200), a radio resource control, RRC, message to reconfigure a RRC connection of the UE (100), wherein the RRC connection reconfiguration message configures the S-TTI for uplink, UL, and downlink, DL; and
process a S-TTI, configured by the RRC connection reconfiguration message, to enable a data transmission in the UL or a data reception in the DL,
wherein the S-TTI comprises 2, 3, 4 or 7 orthogonal frequency-division multiplexing, OFDM, symbols.

2. The apparatus of claim 1, wherein the UE assistance information indicates S-TTI configurations supported by the UE (100) in downlink, DL, and uplink ,UL.

3. The apparatus of claim 2, wherein the UE assistance information indicates the supported UL and DL S-TTI configurations separately.

4. The apparatus of claims 2 or 3, wherein the RRC connection reconfiguration message selects a supported S-TTI configuration indicated in the UE capability information.

5. An apparatus configured to be employed within an evolved NodeB, eNB (200), comprising one or more processors configured to:
receive, from a user equipment, UE (100), UE capability information, wherein the UE capability information comprises a list of shortened transmission time interval, S-TTI, configurations supported by the UE (100);
transmit, to the UE (100), a radio resource control, RRC, message to reconfigure a RRC connection of the UE (100), wherein the RRC connection reconfiguration message configures a S-TTI for UL, and DL; and
generate a S-TTI, according to the S-TTI configuration configured by the RRC connection reconfiguration message, to enable a data transmission in the UL or a data reception in the DL,
wherein the S-TTI comprises 2, 3, 4 or 7 orthogonal frequency-division multiplexing, OFDM, symbols.

6. The apparatus of claim 5, wherein the UE assistance information indicates S-TTI configurations supported by the UE (100) in downlink, DL, and uplink ,UL.

7. The apparatus of claim 6, wherein the UE assistance information indicates the supported UL and DL S-TTI configurations separately.

8. The apparatus of claims 6 or 7, wherein the RRC connection reconfiguration message selects a supported S-TTI configuration indicated in the UE capability information.

9. A computer-readable medium storing executable instructions that, in response to execution, cause one or more processors of a user equipment, UE (100), to perform operations comprising:
generating a UE capability information, wherein the UE capability information comprises a list of shortened transmission time interval, S-TTI, configurations supported by the UE (100);
transmitting the UE capability information to an evolved NodeB, eNB (200);
receiving, from the eNB (200), a radio resource control, RRC, message to reconfigure a RRC connection of the UE (100), wherein the RRC connection reconfiguration message configures the S-TTI for uplink, UL, and downlink, DL; and
processing a S-TTI, configured by the RRC connection reconfiguration message, to enable a data transmission in the UL or a data reception in the DL,
wherein the S-TTI comprises 2, 3, 4 or 7 orthogonal frequency-division multiplexing, OFDM, symbols.

10. The computer-readable medium of claim 9, wherein the UE assistance information indicates S-TTI configurations supported by the UE (100) in downlink, DL, and uplink ,UL.

11. The computer-readable medium of claim 10, wherein the UE assistance information indicates the supported UL and DL S-TTI configurations separately.

12. The computer-readable medium of claims 10 or 11, wherein the RRC connection reconfiguration message selects a supported S-TTI configuration indicated in the UE capability information.

13. A computer-readable medium storing executable instructions that, in response to execution, cause one or more processors of an evolved NodeB, eNB (200), to perform operations comprising:
receiving, from a user equipment, UE (100), UE capability information, wherein the UE capability information comprises a list of shortened transmission time interval, S-TTI, configurations supported by the UE (100);
transmitting, to the UE (100), a radio resource control, RRC, message to reconfigure a RRC connection of the UE (100), wherein the RRC connection reconfiguration message configures a S-TTI for UL, and DL; and
generating a S-TTI, according to the S-TTI configuration configured by the RRC connection reconfiguration message, to enable a data transmission in the UL or a data reception in the DL,
wherein the S-TTI comprises 2, 3, 4 or 7 orthogonal frequency-division multiplexing, OFDM, symbols.

14. The apparatus of claim 5, wherein the UE assistance information indicates S-TTI configurations supported by the UE (100) in downlink, DL, and uplink ,UL, and wherein the UE assistance information indicates the supported UL and DL S-TTI configurations separately.

15. The apparatus of claims 14, wherein the RRC connection reconfiguration message selects a supported S-TTI configuration indicated in the UE capability information.

## Patentansprüche

1. Vorrichtung, die konfiguriert ist, um innerhalb einer Benutzerausrüstung, UE, (100) eingesetzt zu werden, umfassend einen oder mehrere Prozessoren (210), die konfiguriert sind zum:
Erzeugen einer UE Fähigkeitsinformation, wobei die UE Fähigkeitsinformation eine Liste von gekürzten Übertragungszeitintervall-, S-TTI-, Konfigurationen umfasst, die durch die UE (100) unterstützt werden;
Übertragen der UE Fähigkeitsinformation an einen Evolved NodeB, eNB (200);
Empfangen, von dem eNB (200), einer Funkressourcensteuerungs-, RRC-, Nachricht zum Rekonfigurieren einer RRC Verbindung der UE (100), wobei die RRC Verbindungsrekonfigurationsnachricht das S-TTI für Uplink, UL, und Downlink, DL, konfiguriert; und
Verarbeiten eines S-TTI, das durch die RRC Verbindungsrekonfigurationsnachricht konfiguriert wurde, zum Ermöglichen einer Datenübertragung in dem UL oder eines Datenempfangs in dem DL,
wobei das S-TTI 2, 3, 4 oder 7 orthogonale Frequenzmultiplexing-, OFDM-, Symbole umfasst.

2. Vorrichtung nach Anspruch 1, wobei die UE Assistenzinformation S-TTI Konfigurationen anzeigen, die durch die UE (100) in Downlink, DL, und Uplink, UL, unterstützt werden.

3. Vorrichtung nach Anspruch 2, wobei die UE Assistenzinformation die unterstützten UL und DL S-TTI Konfigurationen separat anzeigt.

4. Vorrichtung nach Anspruch 2 oder 3, wobei die RRC Verbindungsrekonfigurationsnachricht eine unterstützte S-TTI Konfiguration auswählt, die in der UE Fähigkeitsinformation angezeigt ist.

5. Vorrichtung, die konfiguriert ist, um innerhalb eines Evolved Node B, eNB (200) eingesetzt zu werden, umfassend einen oder mehrere Prozessoren, die konfiguriert sind zum:
Empfangen, von einer Benutzerausrüstung, UE (100), von UE Fähigkeitsinformation, wobei die UE Fähigkeitsinformation eine Liste von gekürzten Übertragungszeitintervall-, S-TTI-, Konfigurationen umfasst, die durch die UE (100) unterstützt werden;
Übertragen, an die UE (100), einer Funkressourcensteuerungs-, RRC-, Nachricht zum Rekonfigurieren einer RRC Verbindung der UE (100), wobei die RRC Verbindungsrekonfigurationsnachricht das S-TTI für Uplink, UL, und Downlink, DL, konfiguriert;
Erzeugen eines S-TTI, gemäß den S-TTI Konfiguration, das durch die RRC Verbindungsrekonfigurationsnachricht konfiguriert wurde, zum Ermöglichen einer Datenübertragung in dem UL oder eines Datenempfangs in dem DL,
wobei das S-TTI 2, 3, 4 oder 7 orthogonale Frequenzmultiplexing-, OFDM-, Symbole umfasst.

6. Vorrichtung nach Anspruch 5, wobei die UE Assistenzinformation S-TTI Konfigurationen anzeigt, die durch die UE (100) in Downlink, DL, und Uplink, UL, unterstützt werden.

7. Vorrichtung nach Anspruch 6, wobei die UE Assistenzinformation die unterstützten UL und DL S-TTI Konfigurationen separat anzeigt.

8. Vorrichtung nach Anspruch 6 oder 7, wobei die RRC Verbindungsrekonfigurationsnachricht eine unterstützte S-TTI Konfiguration auswählt, die in der UE Fähigkeitsinformation angezeigt ist.

9. Computerlesbares Medium, das ausführbare Anweisungen speichert, die, als Reaktion auf Ausführung, einen oder mehrere Prozessoren eine Benutzerausrüstung, UE (100), veranlassen, Vorgänge durchzuführen, die Folgendes umfassen:
Erzeugen einer UE Fähigkeitsinformation, wobei die UE Fähigkeitsinformation eine Liste von gekürzten Übertragungszeitintervall-, S-TTI-, Konfigurationen umfasst, die durch die UE (100) unterstützt werden;
Übertragen der UE Fähigkeitsinformation an einen Evolved NodeB, eNB (200);
Empfangen, von dem eNB (200), einer Funkressourcensteuerungs-, RRC-, Nachricht zum Rekonfigurieren einer RRC Verbindung der UE (100), wobei die RRC Verbindungsrekonfigurationsnachricht das S-TTI für Uplink, UL, und Downlink, DL, konfiguriert; und
Verarbeiten eines S-TTI, das durch die RRC Verbindungsrekonfigurationsnachricht konfiguriert wurde, zum Ermöglichen einer Datenübertragung in dem UL oder eines Datenempfangs in dem DL,
wobei das S-TTI 2, 3, 4 oder 7 orthogonale Frequenzmultiplexing-, OFDM-, Symbole umfasst.

10. Vorrichtung nach Anspruch 9, wobei die UE Assistenzinformation S-TTI Konfigurationen anzeigt, die durch die UE (100) in Downlink, DL, und Uplink, UL, unterstützt werden.

11. Vorrichtung nach Anspruch 10, wobei die UE Assistenzinformation die unterstützten UL und DL S-TTI Konfigurationen separat anzeigt.

12. Vorrichtung nach Anspruch 10 oder 11, wobei die RRC Verbindungsrekonfigurationsnachricht eine unterstützte S-TTI Konfiguration auswählt, die in der UE Fähigkeitsinformation angezeigt ist.

13. Computerlesbares Medium, das ausführbare Anweisungen speichert, die, als Reaktion auf Ausführung, einen oder mehrere Prozessoren eines Evolved Node B, eNB (200), veranlassen, Vorgänge durchzuführen, die Folgendes umfassen:
Empfangen, von einer Benutzerausrüstung, UE (100), von UE Fähigkeitsinformation, wobei die UE Fähigkeitsinformation eine Liste von gekürzten Übertragungszeitintervall-, S-TTI-, Konfigurationen umfasst, die durch die UE (100) unterstützt werden;
Übertragen, an die UE (100), einer Funkressourcensteuerungs-, RRC-, Nachricht zum Rekonfigurieren einer RRC Verbindung der UE (100), wobei die RRC Verbindungsrekonfigurationsnachricht das S-TTI für Uplink, UL, und Downlink, DL, konfiguriert; und
Erzeugen eines S-TTI, gemäß den S-TTI Konfiguration, das durch die RRC Verbindungsrekonfigurationsnachricht konfiguriert wurde, zum Ermöglichen einer Datenübertragung in dem UL oder eines Datenempfangs in dem DL,
wobei das S-TTI 2, 3, 4 oder 7 orthogonale Frequenzmultiplexing-, OFDM-, Symbole umfasst.

14. Vorrichtung nach Anspruch 5, wobei die UE Assistenzinformation S-TTI Konfigurationen anzeigt, die durch die UE (100) in Downlink, DL, und Uplink, UL, unterstützt werden, und wobei die UE Assistenzinformation die unterstützten UL und DL S-TTI Konfigurationen separat anzeigt.

15. Vorrichtung nach Anspruch 14, wobei die RRC Verbindungsrekonfigurationsnachricht eine unterstützte S-TTI Konfiguration auswählt, die in der UE Fähigkeitsinformation angezeigt ist.

## Revendications

1. Un appareil configuré pour être employé à l'intérieur d'un équipement utilisateur, UE (100), comprenant un ou plusieurs processeurs (210) configurés pour :
générer une information de capacité d'UE, dans lequel l'information de capacité d'UE comprend une liste de configurations d'intervalle de temps de transmission raccourci, S-TTI, prises en charge par l'UE (100) ;
transmettre l'information de capacité d'UE à un nœud B évolué, eNB (200) ;
recevoir, en provenance de l'eNB (200), un message de contrôle de ressource radio, RRC, pour reconfigurer une connexion RRC de l'UE (100), dans lequel le message de reconfiguration de connexion RRC configure le S-TTI pour une liaison montante, UL, et une liaison descendante, DL ; et
traiter un S-TTI, configuré par le message de reconfiguration de connexion RRC, pour permettre une transmission de données dans l'UL ou une réception de données dans la DL,
dans lequel le S-TTI comprend 2, 3, 4 ou 7 symboles de multiplexage par répartition en fréquences orthogonales, OFDM.

2. L'appareil selon la revendication 1, dans lequel l'information d'assistance d'UE indique des configurations S-TTI prises en charge par l'UE (100) en liaison descendante, DL, et en liaison montante, UL.

3. L'appareil selon la revendication 2, dans lequel l'information d'assistance d'UE indique les configurations S-TTI UL et DL prises en charge séparément.

4. L'appareil selon les revendications 2 ou 3, dans lequel le message de reconfiguration de connexion RRC sélectionne une configuration S-TTI prise en charge indiquée dans l'information de capacité d'UE.

5. Un appareil configuré pour être employé à l'intérieur d'un nœud B évolué, eNB (200), comprenant un ou plusieurs processeurs configurés pour :
recevoir, en provenance d'un équipement utilisateur, UE (100), une information de capacité d'UE, dans lequel l'information de capacité d'UE comprend une liste de configurations d'intervalle de temps de transmission raccourci, S-TTI, prises en charge par l'UE (100) ;
transmettre, à l'UE (100), un message de contrôle de ressource radio, RRC, pour reconfigurer une connexion RRC de l'UE (100), dans lequel le message de reconfiguration de connexion RRC configure un S-TTI pour UL et DL ; et
générer un S-TTI, selon la configuration S-TTI configurée par le message de reconfiguration de connexion RRC, pour permettre une transmission de données dans l'UL ou une réception de données dans la DL,
dans lequel le S-TTI comprend 2, 3, 4 ou 7 symboles de multiplexage par répartition en fréquences orthogonales, OFDM.

6. L'appareil selon la revendication 5, dans lequel l'information d'assistance d'UE indique des configurations S-TTI prises en charge par l'UE (100) en liaison descendante, DL, et en liaison montante, UL.

7. L'appareil selon la revendication 6, dans lequel l'information d'assistance d'UE indique les configurations S-TTI UL et DL prises en charge séparément.

8. L'appareil selon les revendications 6 ou 7, dans lequel le message de reconfiguration de connexion RRC sélectionne une configuration S-TTI prise en charge indiquée dans l'information de capacité d'UE.

9. Un support lisible par ordinateur stockant des instructions exécutables qui, en réponse à l'exécution, amènent un ou plusieurs processeurs d'un équipement utilisateur, UE (100), à effectuer des opérations comprenant :
la génération d'une information de capacité d'UE, dans lequel l'information de capacité d'UE comprend une liste de configurations d'intervalle de temps de transmission raccourci, S-TTI, prises en charge par l'UE (100) ;
la transmission de l'information de capacité d'UE à un nœud B évolué, eNB (200) ;
la réception, en provenance de l'eNB (200), d'un message de contrôle de ressource radio, RRC, pour reconfigurer une connexion RRC de l'UE (100), dans lequel le message de reconfiguration de connexion RRC configure le S-TTI pour une liaison montante, UL, et une liaison descendante, DL ; et
le traitement d'un S-TTI, configuré par le message de reconfiguration de connexion RRC, pour permettre une transmission de données dans l'UL ou une réception de données dans la DL,
dans lequel le S-TTI comprend 2, 3, 4 ou 7 symboles de multiplexage par répartition en fréquences orthogonales, OFDM.

10. Le support lisible par ordinateur selon la revendication 9, dans lequel l'information d'assistance d'UE indique des configurations S-TTI prises en charge par l'UE (100) en liaison descendante, DL, et en liaison montante, UL.

11. Le support lisible par ordinateur selon la revendication 10, dans lequel l'information d'assistance d'UE indique les configurations S-TTI UL et DL prises en charge séparément.

12. Le support lisible par ordinateur selon les revendications 10 ou 11, dans lequel le message de reconfiguration de connexion RRC sélectionne une configuration S-TTI prise en charge indiquée dans l'information de capacité d'UE.

13. Un support lisible par ordinateur stockant des instructions exécutables qui, en réponse à l'exécution, amènent un ou plusieurs processeurs d'un nœud B évolué, eNB (200), à effectuer des opérations comprenant :
la réception, en provenance d'un équipement utilisateur, UE (100), d'une information de capacité d'UE, dans lequel l'information de capacité d'UE comprend une liste de configurations d'intervalle de temps de transmission raccourci, S-TTI, prises en charge par l'UE (100) ;
la transmission, à l'UE (100), d'un message de contrôle de ressource radio, RRC, pour reconfigurer une connexion RRC de l'UE (100), dans lequel le message de reconfiguration de connexion RRC configure un S-TTI pour UL et DL ; et
la génération d'un S-TTI, selon la configuration S-TTI configurée par le message de reconfiguration de connexion RRC, pour permettre une transmission de données dans l'UL ou une réception de données dans la DL,
dans lequel le S-TTI comprend 2, 3, 4 ou 7 symboles de multiplexage par répartition en fréquences orthogonales, OFDM.

14. L'appareil selon la revendication 5, dans lequel l'information d'assistance d'UE indique des configurations S-TTI prises en charge par l'UE (100) en liaison descendante, DL, et en liaison montante, UL, et dans lequel l'information d'assistance d'UE indique les configurations S-TTI UL et DL prises en charge séparément.

15. L'appareil selon la revendication 14, dans lequel le message de reconfiguration de connexion RRC sélectionne une configuration S-TTI prise en charge indiquée dans l'information de capacité d'UE.
